# EUROPEAN PATENT SPECIFICATION

(11) **EP 2 764 781 B1**
(45) Date of publication and mention of the grant of the patent: **20.12.2017**
(21) Application number: 12838574.7
(22) Date of filing: 02.10.2012
(51) Int. Cl.: A23L 2/52, A23L 2/66, A23L 2/68

(54) **DRINK COMPOSITION**
TRINKZUSAMMENSETZUNG
COMPOSITION DE BOISSON

(30) Priority: 07.10.2011 JP 2011223319
(43) Date of publication of application: 13.08.2014
(73) Proprietor: Fujifilm Corporation, Minato-ku Tokyo 106-8620 (JP)
(72) Inventor: SATO, Masao, Kanagawa 258-8577 (JP)
(74) Representative: Hoffmann Eitle
(86) International application number: PCT/JP2012/075505
(87) International publication number: WO 2013/051556

(56) References cited:
- EP-A1- 1 738 659
- EP-A1- 2 088 157
- WO-A1-2007/023999
- WO-A1-2011/075527
- WO-A1-2011/075527
- WO-A2-2013/049540
- JP-A- 2007 006 888
- JP-A- 2008 194 010
- JP-A- 2010 098 969
- JP-A- 2011 125 329
- JP-A- 2011 125 329

## Description

### BACKGROUND OF THE INVENTION

### 1. Field of the Invention

The present invention relates to a beverage composition.

### 2. Description of the Related Art

A collagen is an animal protein which has been used as gelatin in a food field in the related art, however, since a collagen is a main component of dermis, connective tissue, or the like, a collagen is also particularly getting attention from the aspect of a medical field and a beauty field in recent years. In addition, in order to effectively use a collagen which is ingested in the body, a food and a beverage containing a collagen peptide in which a polymeric collagen is decomposed into low molecular weight have been also developed. Furthermore, in order to obtain a high effect, a beverage which is blended with 10,000 mg of the collagen peptide per one bottle is becoming the main current.

In a beverage using such a collagen peptide, there exists a problem in terms of palatability caused by having an odor peculiar to the collagen peptide. In particular, in a case of blending with 10,000 mg of the collagen peptide per one bottle, the odor is particularly emphasized since a concentration of the collagen peptide becomes higher than usual.

In this manner, as to a beverage containing the .collagen peptide having an unpleasant smell, for example, a technique which realizes a health beverage having excellent flavor by using two or more kinds of essences including an adlay essence or the like, an acidulant, a fruit-based flavor, or the like in a beverage containing various types of nutrients including a collagen hydrolyzate is disclosed in JP1993-199855A (JP-H05-199855A). In addition, in order to suppress coagulation and sedimentation due to minerals or the like generated in a beverage including fruit juice, in addition to the suppression of an unpleasant smell of the collagen peptide, a technique of using fruit juice and phosphoric acid or a phosphoric acid salt in addition to the collagen peptide is disclosed in WO2007/125888A. In WO2007/125888A, it is described that it is possible to suppress an unpleasant smell and obtain an oral liquid composition having good flavor and excellent preservation stability by blending fruit juice such as concentrated grape juice with a phosphoric acid salt such as sodium metaphosphate.

On the other hand, the beverage containing such a collagen peptide is classified as a refreshing drink and the heat treatment is performed for the purpose of sterilizing. The conditions of sterilizing are largely distinguished by the pH of the beverage, and yeast or mold in an acidic region and a bacterial spore in a neutral pH region are respectively set to a subject for sterilization. There is not a storage standard, and a method of heating at 65°C or more of the temperature in the center part for 10 minutes or more as to the sterilization for one having the pH less than 4.0 and a method of heating at 85°C or more for 30 minutes or more as to the sterilization for one having the pH from 4.0 to 4.6, as a manufacturing standard for one for which the sterilization is required, are described in the Food Sanitation Act in Japan, and for the purpose of imparting the antiseptic property to the beverage to make it a safe beverage, there exists another problem in which the pH of the beverage itself is suppressed low.

In addition, as to a beverage containing such a collagen peptide having a high concentration, a beverage in which the pH is adjusted to 4.0 or less using citric acid or ascorbic acid is disclosed in JP2011-103822A. In this Patent Document, a technique in which the viscosity of the beverage is optimally kept and the beverage is allowed to have a flavor using a flavor such as yoghurt is disclosed for the purpose of making both textures (a feeling of effect and a feeling of satisfaction when putting into the mouth) of a state in which the beverage is chilled in the refrigerator and a state in which the beverage is kept at room temperature excellent.

WO 2011/075527 A1 discloses a beverage comprising an aqueous component; between about 2% and about 15% by weight hydrolysed protein; and an acid blend comprising a first acid component comprising at least one of phosphoric acid and citric acid and a second acid component comprising at least one of tartaric acid, fumaric acid, malic acid, gluconic acid, ascorbic acid, and lactic acid; wherein the beverage comprises a pH of less than 4, and wherein the beverage exhibits a bitterness of less than about 3, a tartness of between about 2 and about 6, and an astringency of less than about 3, as determined by a sensory panel using a scale of 0 to 7, wherein 0 corresponds to no detection and wherein 7 corresponds to high detection. The hydrolysed protein may comprise hydrolysed whey and hydrolysed collagen, the weight ratio of hydrolysed whey to hydrolysed collagen being between about 50:50 and about 100:0.

EP 2 088 157 A discloses a food or beverage containing a collagen peptide composition obtainable by digesting a collagen or gelatin with protease, which comprises 70% to 100% by weight of peptides with a molecular weight 500 or more to 3000 or less, less than 10% by weight of peptides with a molecular weight of less than 500, and less than 20% by weight of peptides with a molecular weight of more than 3000, based on the total weight of the composition. The food or beverage may be adequately mixed with a generally used additive according to its type, for example sweeteners such as sugar, fructose, isomerized sugar syrup, glucose, aspartame, and stevia, acidulants such as citric acid, malic acid, and tartaric acid, excipients such as dextrin and starch, binders, diluents, flavoring agents, buffering agents, thickeners, gelatinizing agents, colorants, stabilizers, emulsifiers, dispersants, suspending agents and antiseptics.

### SUMMARY OF THE INVENTION

By the way, it has been known that the collagen peptide has pH buffering ability. In a case of containing the collagen peptide having a high concentration, it becomes difficult to of acidifiers including phosphoric acid and ascorbic acid, the total amount of the acidifiers being 100 mg/mL to 400 mg/mL with respect to the volume of the beverage composition.
[2] The beverage composition according to [1], in which a concentration of the phosphoric acid is from 20 mg/10 mL to 200 mg/10 mL with respect to a volume of the composition.
[3] The beverage composition according to [1] or [2], in which the acidifiers further include at least one of citric acid, tartaric acid, malic acid, lactic acid, succinic acid and fumaric acid.
[4] The beverage composition according to any of [1] to [3] further including at least one kind of amino acid selected from a group consisting of lysine, proline and ornithine.
[5] The beverage composition according to any of [1] to [4] further including at least one kind of a sweetener with high sweetness degree selected from a group consisting of aspartame, thaumatin, stevia, sucralose and acesulfame potassium.
[6] A packaged beverage including the beverage composition according to any of [1] to [5].

According to the present invention, there is provided a beverage composition containing a collagen peptide having a high concentration and having moderately acidic taste and excellent flavor in a pH range of the pH 4.0 or less.

### DESCRIPTION OF THE PREFERRED EMBODIMENTS

The beverage composition according to the present invention is a beverage composition whose pH is 4.0 or less and which comprises:

2,000 mg/10 mL or more of a low molecular collagen peptide having an average molecular weight of 3,000 or less and two or more kinds of acidifiers including phosphoric acid and ascorbic acid, the total amount of the acidifiers being 100 mg/mL to 400 mg/mL with respect to the volume of the beverage composition.

According to the present invention, since the beverage composition includes the low molecular collagen peptide having a predetermined average molecular weight in a high concentration which is 2,000 mg/10 mL or more and includes two or more kinds of acidifiers including phosphoric acid and ascorbic acid, a collagen peptide beverage composition having moderately acidic taste and excellent flavor can be provided, even the pH is 4 or less.

To explain this in detail, in the beverage composition, in a case where the beverage composition including the low molecular collagen peptide having the average molecular weight of 3,000 or less in a high concentration which is 2,000 mg/10 mL or more is adjusted to suppress an excessive acidic taste and keep the antiseptic property, even the collagen peptide has the pH buffering ability.

In the present specification, the term "step" includes a step which is difficult to clearly distinguish from other step as long as the intended action in the present step is achieved, in addition to an independent step.

In addition, in the present invention, a numerical range indicated using "to" indicates a range including numerical values described before and after "to" respectively as a minimum value and a maximum value.

In addition, in the present invention, in a case of referring to the amount or concentration of each component in the composition, the amount or concentration means the total amount of a plurality of substances which exist in the composition in a case where a plurality of substances falling under each component exist in the composition, unless otherwise specified.

Hereinafter, description will be given of the present invention.

The collagen peptide is a low molecular weight collagen peptide having the average molecular weight of 3,000 or less. By setting the average molecular weight to 3,000 or less, there is a tendency that the absorbability of the collagen peptide increases when being ingested as a food and a beverage and it is possible to avoid generating a big difference between the viscous properties at room temperature and in cold storage. The average molecular weight of the collagen peptide is preferably 500 to 3,000, and further preferably 1,000 to 3,000. By setting the average molecular weight to 500 or more, there is a tendency that it is possible to obtain the viscous property having a preferred texture.

The average molecular weight of the collagen peptide means a value which is measured by using a gel permeation chromatography (GPC: polyethylene glycol (PEG) standard), however, in a case of a commercial product, it is sufficient to follow the product information provided from a supply source.

To determine the average molecular weight by the GPC, the average molecular weight is calculated based on the calibration curve of the relationship between the retention time obtained by measuring several different kinds of polyethylene glycols (PEG) in which the molecular weights are known in advance under the same conditions and the molecular weight. The average molecular weight in the present invention indicates a weight average molecular weight which is calculated in terms of PEG in accordance with this method.

The collagen peptide is one obtained by hydrolyzing gelatin with an enzyme or an acid, is a protein containing a lot of glycine, and is available as a commercial product. The collagen may be a collagen extracted from a collagen tissue of mammals or a collagen extracted from a collagen tissue of fish, and they are not particularly limited. In recent years, from the viewpoint of a commodity image, the safety, or the like, the collagen derived from fish is preferable. A material of the collagen derived from fish may be a saltwater fish or a freshwater fish, and a skin of a tuna (yellowfin tuna), a shark, a cod, a bastard halibut, a flounder, a sea bream, a tilapia, a salmon, a catfish, or the like is included. The collagen derived from these fish is one extracted from a scale or a skin of fish, and has characteristics in which the content of proline, lysine, or the like is small, compared to the collagen of human beings or other animals. As a material of the collagen derived from mammals, a pig, cattle and the like are included.

The concentration of the collagen peptide is 2,000 mg/10 mL or more. By setting to 2,000 mg/10 mL or more, it is possible to effectively use the collagen peptide in the body. The concentration of the collagen peptide is not particularly limited as long as the concentration of the collagen peptide is 2,000 mg/10 mL or more with respect to the volume of the beverage composition, however, the concentration of the collagen peptide is preferably from 2,000 mg/10 mL to 4,000 mg/10 mL, and further preferably from 2,500 mg/10 mL to 3,500 mg/10 mL. By setting to 4,000 mg/10 mL or less, it is possible to set to the viscosity within an acceptable range as a beverage.

The beverage composition includes two or more kinds of acidifiers containing phosphoric acid and ascorbic acid. In doing so, it is possible to set the pH of a solution to 4.0 or less while suppressing the acidic taste and it is possible to realize moderately acidic taste and excellent flavor. Phosphoric acid capable of being used in the beverage composition can be used without particular limitation as long as phosphoric acid is capable of being used as a food and a beverage. However, a phosphoric acid salt such as sodium metaphosphate is unable to set the pH of the beverage composition to 4.0 or less while keeping moderately acidic taste and excellent flavor.

The concentration of phosphoric acid in the beverage composition is preferably 20 mg/10 mL to 200 mg/10 mL, and more preferably 25 mg/10 mL to 130 mg/10 mL, with respect to the volume of the beverage composition. By setting to 20 mg/10 mL or more, there is a tendency that moderately acidic taste is obtained, and by setting to 200 mg/10 mL or less, there is a tendency that unnatural bitter taste is easily suppressed.

The acidifier except phosphoric acid and ascorbic acid is not particularly limited as long as the acidifier is an acidifier capable of being used with respect to the beverage, particularly an acidifier which is suitable for use with respect to a refreshing drink, and acetic acid, gluconic acid, citric acid, tartaric acid, malic acid, lactic acid, succinic acid, fumaric acid, and the like can be used. Among those, the acidifier in which it is possible to realize the preferred flavor in the present invention is citric acid, tartaric acid, malic acid, lactic acid, succinic acid or fumaric acid, among those, citric acid, tartaric acid or malic acid is more preferable from the viewpoint of the balance between stimulation and a refreshing feeling as a beverage, and citric acid, tartaric acid or malic acid is further preferable from the viewpoint of the pH adjusting ability. These acidifiers except phosphoric acid and ascorbic acid may be used as one kind alone or may be used in combination of two or more kinds thereof.

The concentration of the acidifier except phosphoric acid in the beverage composition is preferably 10 mg/10 mL to 800 mg/10 mL, and more preferably 20 mg/10 mL to 350 mg/10 mL with respect to the volume of the beverage composition. By setting to 10 mg/10 mL or more, it is possible to obtain moderately acidic taste using phosphoric acid together, and by setting to 800 mg/10 mL or less, there is a tendency that it is possible to sufficiently suppress an excessive acidic taste or stimulation.

The total amount of the acidifier containing phosphoric acid is 100 mg/10 mL to 400 mg/10 mL with respect to the volume of the beverage composition.

In addition, in a case of changing the concentration of the collagen peptide, it is preferred to change the ratio of the acidifier except phosphoric acid to phosphoric acid in order to balance with the odor peculiar to the collagen peptide and impart excellent flavor. The content rate of phosphoric acid varies depending on the concentration of the collagen peptide, the kind of the acidifier used, or the like in the beverage composition, however, the content rate of phosphoric acid, for example can be set to within a range from 9% by weight to 85% by weight to the entirety of the acidifier.

The beverage composition preferably includes at least one amino acid selected from a group consisting of lysine, proline and ornithine. Lysine, proline and ornithine which are a kind of amino acid are known as a constituent component of the collagen or a synthesis promoting component of the collagen, and it is excepted that the generation efficiency and the utilization efficiency of the collagen in the body are further enhanced by adding these additional amino acids in the body: Moreover, as to amino acid used in the present invention, only L-body is used.

In particular, in a case of using the low molecular weight collagen peptide derived from fish as the collagen peptide, in order to more effectively enhance the utilization efficiency of the collagen, it is preferred to use the amino acid together, among those, it is further preferred to use lysine together.

The concentration of the amino acid described above in the beverage composition is preferably 10 mg/10 mL to 200 mg/10 mL, and more preferably 30 mg/10 mL to 100 mg/10 mL, with respect to the volume of the beverage composition. If the concentration of the amino acid is 10 mg/10 mL or more, there is a tendency that the collagen peptide is effectively used, and if the concentration of the amino acid is 200 mg/10 mL or less, it is possible to suppress the flavor peculiar to amino acid.

In order to adjust to the beverage having further preferred flavor, the beverage composition preferably includes at least one kind selected from a group consisting of a sweetener with high sweetness degree and a sweetener except a sweetener with high sweetness degree.

The sweetener with high sweetness degree is a general term for a synthetic sweetener or a natural sweetener having the sweetness of several tens of times to several thousand times of sugar. As an example of the sweetener with high sweetness degree, there is no limitation in a range in which it is possible to preferably adjust the flavor, however, in the present invention, aspartame, thaumatin, stevia, sucralose or acesulfame potassium can be preferably used, and acesulfame potassium or sucralose is further preferable. The sweetener with high sweetness degree may be used as one kind alone or may be used in combination of two or more kinds thereof.

The concentration of the sweetener with high sweetness degree in the beverage composition is preferably 1 mg/10 mL to 50 mg/10 mL, and more preferably 3 mg/10 mL to 25 mg/10 mL. If the concentration of the sweetener with high sweetness degree is 1 mg/10 mL or more, there is a tendency that moderate sweetness can be achieved, and if the concentration of the sweetener with high sweetness degree is 50 mg/10 mL or less, there is a tendency that moderate flavor can be achieved.

As the sweetness except the sweetener with high sweetness degree, saccharides, a sugar alcohol and powdered sugar are included. As the saccharides, monosaccharides such as glucose, fructose, galactose or an isomerized sugar, disaccharides such as sugar, lactose or palatinose; oligosaccharides such as fructo-oligosaccharide, isomalt-oligosaccharide or galacto-oligosaccharide, and the like are included. As the sugar alcohol, monosaccharide alcohols such as erythritol, xylitol, sorbitol or mannitol; disaccharide alcohols such as maltitol, isomaltitol, lactitol, or the like; trisaccharide alcohols such as maltotriitol, isomaltotriitol or panitol; tetra or more saccharide alcohols such as an oligosaccharide alcohol; a sugar alcohol such as powdered reducing maltose syrup, and the like are included. As the sweetener, glucose, powdered sugar, erythritol, xylitol and sorbitol are more preferable, furthermore, erythritol is most preferable. These sweeteners may be used as one kind alone and may be in combination of two or more kinds thereof.

The concentration of the sweetener except the sweetener with high sweetness degree in the beverage composition is preferably 100 mg/10 mL to 5,000 mg/10 mL, and more preferably 300 mg/10 mL to 2,500 mg/10 mL. The sweetener may be used as one kind alone or may be used in combination of two or more kinds thereof.

In addition, in the beverage composition, the sweetener with high sweetness degree and the sweetener apart from that may be respectively used alone and may be used in combination thereof. As the beverage composition, the sweetener with high sweetness degree and the sweetener apart from the sweetener with high sweetness degree can be preferably used together.

In order to adjust the flavor, the beverage composition can preferably further include a fragrance. As the fragrance, any fragrance of yogurt, sugar, lychee, peach, mango, pineapple, raspberry, blueberry, cranberry and pear is preferable.

The concentration of the fragrance in the beverage composition is preferably 10 µL/10 mL to 200 µL/10 mL, and more preferably 30 µL/10 mL to 100 µL/10 mL.

The beverage composition may include a functional oily component. The functional oily component means an oily component in which the induction of a predetermined physiological effect in the applied living bodies can be expected in a case of applying it to living bodies. As an example of the functional oily component, carotenoids such as β-carotene, astaxanthin, lutein or lycopene; an unsaturated fatty acid such as linolenic acid, eicosapentaenoic acid (EPA), docosahexaenoic acid (DHA), squalene, squalane or fish oil containing them; coenzyme Q10, and the like are included.

The beverage composition may include other additive components. As such an additive component, various vitamins, a mineral, a coloring agent, an antioxidant, a stabilizer, a preservative, an emulsifier, an antifoam, and the like are included.

It is preferred that the viscosity of the beverage composition be in a range from 10 mPa·s to 35 mPa·s at room temperature (25°C) and in a range from 20 mPa·s to 50 mPa·s at 4°C. If the viscosity of the beverage composition is in the ranges, it is possible to realize an excellent texture in a case of drinking as kept at room temperature or drinking by being cooled, it is therefore desired. By setting to 10 mPa·s or more at room temperature or 20 mPa·s or more at 4°C, there is a tendency to become the viscosity in which the texture is not too smooth and a sufficient feeling of satisfaction is provided as the texture when being drunk. In addition, by setting to 35 mPa·s or less at room temperature or 50 mPa·s or less at 4°C, there is a tendency to become a viscosity that is easy to drink. That is, by setting to within the ranges described above, there is a tendency that it is possible to realize excellent texture.

Here, the viscosity of the beverage composition can be measured by using a rotary viscometer.

The pH of the beverage composition is 4.0 or less. When the pH exceeds 4.0, an effect of the antiseptic property is reduced. Moreover, in a case of the beverage composition in which the pH exceeds 4.0, since a stronger heat treatment becomes necessary in a manufacturing step according to the Food Sanitation Act, there is a tendency to spoil the flavor and a tendency to deteriorate the components. The pH of the beverage composition is preferably from 3.0 to 4.0, and the pH is further preferably from 3.4 to 4.0. By setting the pH to 3.0 or more, there is a tendency that it is possible to suppress an increase in amount of the acidifier used when the pH is adjusted.

A method of manufacturing the beverage composition includes mixing 2000 mg/10 mL or more of the low molecular collagen peptide having the average molecular weight of 3,000 or less and two or more kinds of acidifiers containing phosphoric acid and ascorbic acid (a mixing step), and adjusting the pH to 4.0 or less (a pH adjusting step).

In doing so, it is possible to adjust the beverage composition according to the present invention described before.

The mixing step includes mixing each component configuring the beverage composition. Each component has to be mixed with respect to the preferred aqueous medium. As an aqueous medium which is used, water is usually used. The mixing of each component is not particularly limited, and the mixing step is performed at a temperature in which each component is sufficiently dissolved, for example, within a temperature range from 20°C to 80°C. The mixing is preferably performed while stirring. In addition, the addition order of each component is not particularly limited as long the addition order is in a range in which each component is uniformly mixed.

As described above, since the beverage composition is required to be adjusted to within the predetermined pH range due to containing phosphoric acid and ascorbic acid, the pH adjusting step may be performed at the same time as the mixing step. In addition, the pH adjusting step may be separately and independently performed after the mixing step, as necessary.

The method of manufacturing the beverage composition can include steps other than the above, as necessary. As such an additional step, a viscosity adjusting step, or a filtering step are included. A viscosity adjusting step and a filtering step are well-known in the related art.

The beverage composition may be packaged. The packaged beverage is obtained by filling a container with the beverage composition. The container used for the present packaged beverage has to be one which is usually used as a beverage container and may be for example a PET bottle, a drink box, a glass container, an aluminum can, a steel can or a pouch.

### [Example]

Hereinafter, description will be given of the present invention in detail in Example. However, the present invention is not limited thereto, in any way. Moreover, "part" is based on mass, unless otherwise specified.

### (Preparation of beverage composition)

### [Example 1]

200 mg of L-lysine, 1,000 mg of erythritol, 7.2 mg of sucralose and 8.4 mg of acesulfame potassium were added to 10,000 mg of the collagen peptide having the average molecular weight of 2,700, and 400 mg of L-ascorbic acid, 250 mg of citric acid, 350 mg of L-tartaric acid and 130 mg of phosphoric acid were further added. 15 mL of water was added thereto, the solution was heated and dissolved at 50°C, a fragrance was added after being dissolved, afterwards, water was additionally added to adjust the total volume to 30 mL and the beverage composition was prepared.

When the pH of the obtained beverage composition was measured, the pH was 3.88.

### [Example 2 and comparative examples 45-89]

The beverage compositions were prepared using all same procedures as Example 1 except changing each raw material and the blending amounts thereof as shown in Table 1, Table 2, Table 5 and Table 7.

### [Comparative Examples 1 to 44]

The beverage compositions were prepared using all same procedures as Example 1 except changing each raw material and the blending amounts thereof as shown in Table 3, Table 4, Table 6 and Table 8.

### (pH measurement)

As to the beverage compositions in Examples 1 to 47 and Comparative Examples I to 44, the pH was measured at 25°C. The results are shown in Table 1 to Table 8.

### (Evaluation of flavor)

As to the beverage compositions in Examples 1 to 47 and Comparative Examples 1 to 44, the evaluation of the flavor was conducted as to one in which the pH was 4.0 or less.

As to the evaluation of the flavor, by tasting each beverage in Examples and Comparative Examples, the sensory evaluation of the flavor was performed from the viewpoint of a refreshing feeling and stimulation of the acidic taste. When the flavor was excellent, it was evaluated as A, when a refreshing feeling was slightly insufficient but the flavor was good, it was evaluated as B, when the flavor was fair, it was evaluated as C, when the flavor was an allowable: level, it was evaluated as D and in a case where: there was a problem as a product, it was evaluated as E.

The results are shown in Table 1 to Table 8. Moreover, in Table 1 to Table 8, "*A" means fair as the flavor while there is a feeling that slightly sticks into the tongue and "*B" means fair as a flavor while a refreshing feeling and stimulation are slightly insufficient. "*C*" means that a flavor is allowed while feeling an acidic taste with a sharp taste. In addition, "*D" means that a refreshing feeling and stimulation are low and the flavor is too light and "*E" means that a refreshing feeling and stimulation are low and a bitter flavor is slightly felt. "*F" means that the flavor is not evaluated since the pH exceeds 4.0.

**[Table 1] Examples 1-2 and Comparative Examples 45-56**

| | Example 1 | Example 2 | 45 | 46 | 47 | 48 | 49 | 50 | 51 | 52 | 53 | 54 | 55 | 56 |
|---|---|---|---|---|---|---|---|---|---|---|---|---|---|---|
| Collagen peptide | 10000 mg | ← | ← | ← | ← | ← | ← | ← | ← | ← | ← | ← | ← | ← |
| | | | | | | | | | | | | | | |
| Phosphoric acid | 130 mg | 130 mg | 130 mg | 130 mg | 130 mg | 130 mg | 130 mg | 130 mg | 130 mg | 130 mg | 90 mg | 90 mg | 90 mg | 90 mg |
| L-ascorbic acid | 400 mg | 200 mg | | | | | | | | | | | | |
| Citric acid | 250 mg | 400 mg | 750 mg | 1000 mg | | | | | | | 900 mg | | | |
| Tartaric acid | 350 mg | 400 mg | | | 500 mg | 750 mg | | | | | | 650 mg | 800 mg | |
| Malic acid | | | | | | | 750 mg | | | | | | | 750 mg |
| Succinic acid | | | | | | | | | | 1250 mg | | | | |
| Fumaric acid | | | | | | | | 750mg | | | | | | |
| Lactic acid | | | | | | | | | 1000 mg | | | | | |
| | | | | | | | | | | | | | | |
| L-lysine | 200 mg | ← | ← | ← | ← | ← | ← | ← | ← | ← | ← | ← | ← | ← |
| Erythritol | 1000 mg | ← | ← | ← | ← | ← | ← | ← | ← | ← | ← | ← | ← | ← |
| Sucralose | 7.2 mg | ← | ← | ← | ← | ← | ← | ← | ← | ← | ← | ← | ← | ← |
| Acesulfame K | 8.4 mg | ← | ← | ← | ← | ← | ← | ← | ← | ← | ← | ← | ← | ← |
| Fragrance | appropriate | ← | ← | ← | ← | ← | ← | ← | ← | ← | ←- | ← | ← | ← |
| | | | | | | | | | | | | | | |
| Water | appropriate | ← | ← | ← | ← | ← | ← | ← | ← | ← | ← | ← | ←- | ← |
| | | | | | | | | | | | | | | |
| Liquid measure | 30mL | ← | ← | ← | ← | ← | ← | ← | ← | ← | ←- | ←- | ← | ← |
| Liquid pH | 3.88 | 3.49 | 3.99 | 3.85 | 3.98 | 3.75 | 3.94 | 3.67 | 3.92 | 3.95 | 3.96 | 3.86 | 3.72 | 3.96 |
| Evaluation | A | A | A | A | A | A | A | *A | *D | *C | A | A | A | A |

**[Table 2] Comparative Examples 57-65**

| | 57 | 58 | 59 | 60 | 61 | 62 | 63 | 64 | 65 |
|---|---|---|---|---|---|---|---|---|---|
| Collagen peptide | 10000 mg | ← | ← | ← | ← | ← | ← | ← | ← |
| | | | | | | | | | |
| Phosphoric acid | 180 mg | 180 mg | 180 mg | 350 mg | 350 mg | 350 mg | 500 mg | 500 mg | 500 mg |
| Sodium metaphosphate | | | | | | | | | |
| Potassium mctapbosphatc | | | | | | | | | |
| Sodium pyrophosphate decahvdrate | | | | | | | | | |
| L-ascorbic acid | | | | | | | | | |
| Citric acid | 750 mg | | | 600 mg | | | 350 mg | | |
| Tartaric acid | | 650 mg | | | 600 mg | | | 300 mg | |
| Malic acid | | | 650 mg | | | 600 mg | | | 350 mg |
| Succinic acid | | | | | | | | | |
| Fumaric acid | | | | | | | | | |
| Lactic acid | | | | | | | | | |
| | | | | | | | | | |
| L-lysine | 200 mg | ← | ← | ← | ← | ← | ← | ← | ← |
| Erythritol | 1000 mg | ← | ← | ← | ← | ← | ← | ← | ← |
| Sucralose | 7.2 mg | ← | ← | ← | ← | ← | ← | ← | ← |
| Acesulfame K | 8.4 mg | ← | ← | ← | ← | ← | ← | ← | ← |
| Fragrance | appropriate | ← | ← | ← | ← | ← | ← | ← | ← |
| | | | | | | | | | |
| Water | appropriate | ←- | ← | ← | ← | ← | ← | ← | ← |
| | | | | | | | | | |
| Liquid measure | 30 mL | ← | ←- | ← | ← | ← | ← | ← | ← |
| Liquid pH | 3.99 | 3.78 | 3.95 | 3.89 | 3.64 | 3.82 | 3.90 | 3.74 | 3.85 |
| Evaluation | A | A | A | A | A | A | B | B | B |

**[Table 3]**

| | Comparative Exemple 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|
| Collagen peptide | 10000 mg | ← | ← | ← | ← | ← | ← | ← | ← | ← |
| | | | | | | | | | | |
| Phosphoric acid | 130 mg | 130 mg | 130 mg | 130 mg | 130 mg | 130 mg | 90 mg | | | |
| L-ascorbic acid | 1000 mg | 1500 mg | | | | | | | | |
| Citric acid | | | 500 mg | | | | 650 mg | 1100 mg | | |
| Tartaric acid | | | | | | | | | 1000 mg | |
| Malic acid | | | | | | | | | | 1000 mg |
| Succinic acid | | | | 750 mg | 1000 mg | | | | | |
| Fumaric acid | | | | | | | | | | |
| Lactic acid | | | | | | 750 mg | | | | |
| | | | | | | | | | | |
| L-lysine | 200 mg | ← | ← | ← | ← | ← | ← | ← | ← | ← |
| Erythritol | 1000 mg | ← | ← | ← | ← | ← | ← | ← | ← | ← |
| Sucralose | 7.2 mg | ← | ← | ← | ← | ← | ← | ← | ← | ← |
| Acesulame K | 8.4 mg | ← | ← | ← | ← | ← | ← | ← | ← | ← |
| Fragrance | appropriate | ← | ← | ← | ← | ← | ← | ← | ← | ← |
| | | | | | | | | | | |
| Water | appropriate | ← | ← | ← | ← | ← | ←- | ← | ← | ← |
| | | | | | | | | | | |
| Liquid measure | 30 mL | ← | ← | ← | ← | ← | ← | ← | ← | ← |
| Liquid pH | 4.29 | 4.12 | 4.12 | 4.20 | 406 | 4.11 | 4.17 | 3.98 | 3.65 | 3.88 |
| Evaluation | *F | *F | *F | *F | *F | *F | *F | E | E | E |

**[Table 4]**

| | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 | Comparative Example 20 | Comparative Example 21 |
|---|---|---|---|---|---|---|---|---|---|---|---|
| Collagen peptide | 10000 mg | ← | ← | ← | ← | ← | ← | ← | ← | ← | ← |
| | | | | | | | | | | | |
| Phosphoric acid | 750 mg | 1000 mg | | | | | | | | | |
| Sodium metaphosphate | | | 130 mg | 750 mg | | | | | | | |
| Potassium metaphosphate | | | | | 130 mg | | | | | | |
| Sodium pyrophosphate decahydrate | | | | | | 130 mg | 600 mg | | | | |
| L-ascorbic acid | | | 400 mg | 400 mg | 400 mg | 400 mg | 400 mg | | | | |
| Citric acid | | | 250 mg | 250 mg | 250 mg | 250 mg | 250 mg | 500 mg | 500 mg | | 500 mg |
| Tartaric acid | | | 350 mg | 350 mg | 350 mg | 350 mg | 350 mg | 500 mg | | 500 mg | |
| Malto acid | | | | | | | | | 500 mg | 500 mg | |
| Succinic acid | | | | | | | | | | | |
| Fumaric acid | | | | | | | | | | | 500 mg |
| Lactic acid | | | | | | | | | | | |
| | | | | | | | | | | | |
| L-lysine | 200 mg | ← | ← | ← | ← | ← | ← | ← | ← | ← | ← |
| Erythritol | 1000 mg | ← | ← | ← | ← | ← | ← | ← | ← | ← | ← |
| Sucralose | 7.2 mg | ← | ← | ← | ← | ← | ← | ← | ← | ← | ← |
| Acesulfame K | 8.4 mg | ← | ← | ← | ← | ← | ← | ← | ← | ← | ← |
| Fragrance | appropriate | ← | ← | ← | ← | ← | ← | ← | ← | ← | ← |
| | | | | | | | | | | | |
| Water | appropriate | ← | ← | ← | ← | ← | ← | ← | ← | ← | ← |
| | | | | | | | | | | | |
| Liquid measure | 30 mL | ← | ← | ← | ← | ← | ← | ← | ← | ← | ← |
| Liquid pH | 3.86 | 3.55 | 406 | 4.11 | 4.01 | 407 | 430 | 3.76 | 3.86 | 3.71 | 3.71 |
| Evaluation | *D | *E | *F | *F | *F | *F | *F | E | E | E | E |

**[Table 5] Comparative Examples 66-77**

| | 66 | 67 | 68 | 69 | 70 | 71 | 72 | 73 | 74 | 75 | 76 | 77 |
|---|---|---|---|---|---|---|---|---|---|---|---|---|
| Collagen peptide | 12500 mg | ← | ← | ← | ← | ← | ← | ← | ← | ← | ← | ← |
| | | | | | | | | | | | | |
| Phosphoric acid | 180 mg | 180 mg | 180 mg | 340 mg | 340 mg | 340 mg | 340 mg | 340 mg | 340 mg | 700 mg | 700 mg | 700 mg |
| L-ascorbic acid | | | | | | | | | | | | |
| Citric acid | 1100 mg | | | 800 mg | | | | | | 300 mg | | |
| Tartaric acid | | 1100 mg | | | 800 mg | | | | | | 300 mg | |
| Malic acid | | | 1100 mg | | | 800 mg | | | | | | 300 mg |
| Succinic acid | | | | | | | 1300 mg | | | | | |
| Fulnaric acid | | | | | | | | 800 mg | | | | |
| Lactic acid | | | | | | | | | 1300 mg | | | |
| | | | | | | | | | | | | |
| L-lysine | 250 mg | ← | ← | ← | ← | ← | ← | ← | ← | ← | ← | ← |
| Erythriol | 1500 mg | ← | ← | ← | ← | ← | ← | ← | ← | ← | ← | ← |
| Sucralose | 9 mg | ← | ← | ← | ← | ← | ← | ← | ← | ← | ← | ← |
| Acesulfame K | 10 mg | ← | ← | ← | ← | ← | ← | ← | ← | ← | ← | ← |
| Fragnance | appropriate | ← | ← | ← | ← | ← | ← | ← | ← | ← | ← | ← |
| | | | | | | | | | | | | |
| Water | appropriate | ← | ← | ← | ← | ← | ← | ← | ← | ← | ← | ← |
| | | | | | | | | | | | | |
| Liquid measure | 50 mL | ← | ← | ← | ← | ← | ← | ← | ← | ← | ← | ← |
| Liquid pH | 3.89 | 3.56 | 3.70 | 3.91 | 3.65 | 3.81 | 3.98 | 3.59 | 3.82 | 3.89 | 3.72 | 3.79 |
| Evaluation | A | A | A | A | A | A | *C | *A | *B | B | B | B |

**[Table 6]**

| | Comparative Example 22 | Comparative Example 23 | Comparative Example 24 | Comparative Example 25 | Comparative Example 26 | Comparative Example 27 | Comparative Example 28 | Comparative Example 29 | Comparative Example 30 | Comparative Example 31 | Comparative Example 32 | Comparative Example 33 |
|---|---|---|---|---|---|---|---|---|---|---|---|---|
| Collagen peptide | 12500 mg | ← | ← | ← | ← | ← | ← | ← | ← | ← | ← | ← |
| | | | | | | | | | | | | |
| Phosphoric acid | | | | | 1000 mg | | | | | | | |
| Sodium metaphospha te | | | | | | 180 mg | | | | | | |
| Potassium metaphospha te | | | | | | | 180 mg | | | | | |
| Sodium pyrophospha te decahydrate | | | | | | | | 180 mg | | | | |
| L-ascorbic acid | 2500 mg | | | | | | | | | | | |
| Citric acid | | 1500 mg | | | | 1100 mg | 1100 mg | 1100 mg | 700 mg | 700 mg | | 700 mg |
| Tartaric acid | | | 1500 mg | | | | | | 700 mg | | 700 mg | |
| Malic acid | | | | 1500 mg | | | | | | 700 mg | 700 mg | |
| Succinic acid | | | | | | | | | | | | |
| Fumaric acid | | | | | | | | | | | | 700 mg |
| Lactic acid | | | | | | | | | | | | |
| | | | | | | | | | | | | |
| L-lysine | 230 mg | ← | ← | ← | ← | ← | ← | ← | ← | ← | ← | ← |
| Erythritol | 1500 mg | ← | ← | ← | ← | ← | ← | ← | ← | ← | ← | ← |
| Sucralose | 9 mg | ← | ← | ← | ← | ← | ← | ← | | ← | ← | ← |
| Acesulfame K | 10 mg | ← | ← | ← | ← | ← | ← | ← | ← | ← | ← | ← |
| Fragrance | appropriate | ← | ← | ← | ← | ← | ← | ← | ← | ← | ← | ← |
| | | | | | | | | | | | | |
| Water | appropriate | ← | ← | ← | ← | ← | ← | ← | ← | ← | ← | ← |
| | | | | | | | | | | | | |
| Liquid measure | 50 mL | ← | ← | ← | ← | ← | ← | ← | ← | ← | ← | ← |
| Liquid pH | 4.06 | 3.82 | 3.45 | 370 | 3.77 | 4.06 | 4.05 | 4.12 | 3.72 | 3.78 | 3.66 | 3.44 |
| Evaluation | *F | E | E | E | *E | *F | *F | *F | E | E | E | E |

**[Table 7] Comparative Examples 78-89**

| | 78 | 79 | 80 | 81 | 82 | 83 | 84 | 85 | 86 | 87 | 88 | 89 |
|---|---|---|---|---|---|---|---|---|---|---|---|---|
| Collagen peptide | 10000 mg | ← | ← | ← | ← | ← | ← | ← | ← | ← | ← | ← |
| | | | | | | | | | | | | |
| Phosphoric acid | 180 mg | 180 mg | 180 mg | 340 mg | 340 mg | 340 mg | 340 mg | 340 mg | 340 mg | 500 mg | 500 mg | 500 mg |
| L- ascorbic acid | | | | | | | | | | | | |
| Citric acid | 900 mg | | | 400 mg | | | | | | 200 mg | | |
| Tartaric acid | | 900 mg | | | 300 mg | | | | | | 100 mg | |
| Malic acid | | | 900 mg | | | 400 mg | | | | | | 200 mg |
| Succinic acid | | | | | | | 800 mg | | | | | |
| Fumaric acid | | | | | | | | 300 mg | | | | |
| Lactic acid | | | | | | | | | 600 mg | | | |
| | | | | | | | | | | | | |
| L-lysine | 200 mg | ← | ← | ← | ← | ← | ← | ← | ← | ← | ← | ← |
| Erythrito] | 1200 mg | ← | ← | ← | ← | ← | ← | ← | ← | ← | ← | ← |
| Sucralose | 72 mg | ← | ← | ← | ← | ← | ← | ← | ← | ← | ← | ← |
| Acesulfame K | 8.4 mg | ← | ← | ← | ← | ← | ← | ← | ← | ← | ← | ← |
| Fragrance | appropriate | ← | ← | ← | ← | ← | ← | ← | ← | ← | ← | ← |
| | | | | | | | | | | | | |
| Water | appropriate | ← | ← | ← | ← | ← | ← | ← | ← | ← | ← | ← |
| | | | | | | | | | | | | |
| Liquid measure | 50 mL | ← | ← | ← | ← | ← | ← | ← | ← | ← | ← | ← |
| Liquid pH | 3.81 | 3.51 | 3.70 | 3.98 | 3.93 | 3.91 | 3.96 | 3.84 | 3.95 | 3.94 | 3.97 | 3.86 |
| Evaluation | A | A | A | A | A | A | *C | *A | *B | A | A | A |

**[Table 8]**

| | Comparative Example 34 | Comparative Example 35 | Comparative Example 36 | Comparative Example 37 | Comparative Example 38 | Comparative Example 39 | Comparative Example 40 | Comparative Example 41 | Comparative Example 42 | Comparative Example 43 | Comparative Example 44 |
|---|---|---|---|---|---|---|---|---|---|---|---|
| Collagen peptide | 10000 mg | ← | ← | ← | ← | ← | ← | ← | ← | ← | ← |
| | | | | | | | | | | | |
| Phosphoric acid | | | | 180 mg | | | | | | | |
| Sodium metaphosphate | | | | | 180 mg | | | | | | |
| Potassium meta phosphate | | | | | | 180 mg | | | | | |
| Sodium pyrophosphate decahydrate | | | | | | | 180 mg | | | | |
| L-ascorbic acid | | | | 1500 mg | | | | | | | |
| Citric acid | 1200 mg | | | | 900 mg | 900 mg | 900 mg | 500 mg | 500 mg | | 500 mg |
| Tartaric acid | | 1200 mg | | | | | | 500 mg | | 500 mg | |
| Malic acid | | | 1200 mg | | | | | | 500 mg | 500 mg | |
| Succinic acid | | | | | | | | | | | |
| Fumaric acid | | | | | | | | | | | 500 mg |
| Lactic acid | | | | | | | | | | | |
| | | | | | | | | | | | |
| L-lysine | 200 mg | ← | ← | ← | ← | ← | ← | ← | ← | ← | ← |
| Erythritol | 1200 mg | ← | ← | ← | ← | ← | ← | ← | ← | ← | ← |
| Sucralose | 7.2 mg | ← | ← | ← | ← | ← | ← | ← | ← | ← | ← |
| Acesulfame K | 8.4 mg | ← | ← | ← | ← | ← | ← | ← | ← | ← | |
| Fragrance | appropriate | ← | ← | ← | ← | ← | ← | ← | ← | ← | ← |
| | | | | | | | | | | | |
| Water | appropriate | ← | ← | ← | ← | ← | ← | ← | ← | ← | ← |
| | | | | | | | | | | | |
| Liquid measure | 50 mL | ← | ← | ← | ← | ← | ← | ← | ← | ← | ← |
| Liquid pH | 3.81 | 346 | 3.68 | 403 | 4.05 | 4.08 | 4.12 | 3.78 | 3.84 | 3.73 | 3.69 |
| Evaluation | E | E | E | *F | *F | *F | *F | E | E | E | E |

As shown in Table 1 to Table 2, in the beverage composition including 3,333 mg/10 mL of the collagen peptide, any beverage composition in Examples 1 and 2 and comparative examples 45 to 65 in which phosphoric acid and other acidifier were included and the pH was set to 4.0 or less was a beverage composition provided with moderately acidic taste and excellent flavor. Furthermore, it was confirmed that the flavor of the beverage compositions in Examples 1 and 2 and Comparative Examples 45 to 49 and 53 to 65 containing at least one kind among citric acid, tartaric acid and malic acid as an acidifier except phosphoric acid was more excellent.

In contrast, as shown in Table 3 to Table 4, since the pH exceeded 4.0 in Comparative Examples 1 to 7 and 13 to 17, they were unsuitable from the viewpoint of the antiseptic property. In particular, in Comparative Examples 13 to 17 using a phosphoric acid salt such as sodium metaphosphate, it was difficult to set the pH to 4.0 or less even a phosphoric acid salt was used in the same amount as phosphoric acid and other acidifier in a case where the pH was 4.0 or less was used together in the same amount. In addition, in Comparative Example 11 arid Comparative Example 12 in which only phosphoric acid was used as an acid for controlling the pH, the flavor was lacked in a refreshing feeling, and in Comparative Examples 8 to 10 and 18 to 21 in which phosphoric acid was not used, stimulation of the acidic taste became stronger and thus it was difficult to obtain a preferred flavor.

The similar tendency was obtained in the beverage compositions containing 2,500 mg/10 mL of the collagen peptide (Table 5 and Table 6, Comparative Examples 66 to 77, Comparative Examples 22 to 33) and the beverage compositions containing 2,000 mg/10 mL of the collagen peptide (Table 7 and Table 8, Comparative Examples 78 to 89, Comparative Examples 34 to 44).

According to the present invention, it is found that the beverage composition which includes the collagen peptide having a high concentration and has moderately acidic taste and excellent flavor in a pH range in which the pH is 4.0 or less is obtained.

## Claims

1. A beverage composition whose pH is 4.0 or less and which comprises:
2,000 mg/10 mL or more of a low molecular collagen peptide having an average molecular weight of 3,000 or less; and
two or more kinds of acidifiers including phosphoric acid and ascorbic acid, the total : amount of the acidifiers being 100 mg/10 mL to 400 mg/10 mL with respect to the volume of the beverage composition.

2. A beverage composition according to Claim 1, comprising from 20 mg/10 mL to 200 mg/10 mL of phosphoric acid with respect to the volume of the beverage composition.

3. A beverage composition according to Claim 1 or Claim 2, wherein the acidifiers further include at least one of citric acid, tartaric acid, malic acid, lactic acid, succinic acid and fumaric acid.

4. A beverage composition according to any preceding Claim, further comprising at least one of lysine, proline and ornithine.

5. A beverage composition according to any preceding claim, further comprising at least one of aspartame, thaumatin, stevia, sucralose and acesulfame potassium.

6. A packaged beverage comprising a beverage composition as defined in any preceding claim.

## Patentansprüche

1. Getränkezusammensetzung, deren pH 4,0 oder weniger beträgt und die Folgendes umfasst:
2.000 mg/10 mL oder mehr eines Kollagenpeptids mit niedrigem Molekulargewicht, das ein durchschnittliches Molekulargewicht von 3.000 oder weniger hat; und
zwei oder mehr Arten von Säurebildnern, darunter Phosphorsäure und Ascorbinsäure, wobei die Gesamtmenge an Säurebildnern 100 mg/10 mL bis 400 mg/10 mL in Bezug auf das Volumen der Getränkezusammensetzung beträgt.

2. Getränkezusammensetzung nach Anspruch 1, die 20 mg/10 ml bis 200 mg/10 ml Phosphorsäure in Bezug auf das Volumen der Getränkezusammensetzung umfasst.

3. Getränkezusammensetzung nach Anspruch 1 oder Anspruch 2, wobei die Säurebildner weiter mindestens eine von Zitronensäure, Weinsäure, Apfelsäure, Milchsäure, Bernsteinsäure und Fumarsäure aufweisen.

4. Getränkezusammensetzung nach einem der vorhergehenden Ansprüche, die weiter mindestens eines von Lysin, Prolin und Ornithin umfasst.

5. Getränkezusammensetzung nach einem der vorhergehenden Ansprüche, die weiter Aspartam, Thaumatin, Stevia, Sucralose, und Acesulfam-Kalium umfasst.

6. Abgefülltes Getränk, das eine Getränkezusammensetzung wie in einem der vorhergehenden Ansprüche definiert umfasst.

## Revendications

1. Composition de boisson dont le pH est de 4,0 ou moins et qui comprend :
2 000 mg/10 mL ou plus d'un peptide de collagène à faible poids moléculaire ayant un poids moléculaire moyen de 3 000 ou moins ; et
deux types d'acidifiants ou plus incluant de l'acide phosphorique et de l'acide ascorbique, la quantité totale des acidifiants étant de 100 mg/10 mL à 400 mg/10 mL par rapport au volume de la composition de boisson.

2. Composition de boisson selon la revendication 1, comprenant de 20 mg/10 mL à 200 mg/10 mL d'acide phosphorique par rapport au volume de la composition de boisson.

3. Composition de boisson selon la revendication 1 ou la revendication 2, dans laquelle l'acidifiant inclut en outre au moins un parmi l'acide citrique, l'acide tartrique, l'acide malique, l'acide lactique, l'acide succinique et l'acide fumarique.

4. Composition de boisson selon l'une quelconque des revendications précédentes, comprenant en outre au moins une parmi la lysine, la proline et l'ornithine.

5. Composition de boisson selon l'une quelconque des revendications précédente, comprenant en outre au moins un parmi l'aspartame, la thaumatine, la stévia, le sucralose et l'acésulfame de potassium.

6. Boisson conditionnée comprenant une composition de boisson selon l'une quelconque des revendications précédentes.
